# FASCICULE DE BREVET EUROPEEN

(11) **EP 1 758 337 B1**
(45) Date de publication et mention de la délivrance du brevet: **01.08.2012**
(21) Numéro de dépôt: 05300687.0
(22) Date de dépôt: 23.08.2005
(51) Int. Cl.: H04L 29/06

(54) **Procédé de transmission securisée de données, via des reseaux, par échange d'informations d'encryptage, et dispositif d'encryptage/decryptage correspondant**
Methode für Übertragung sicherer Daten durch ein Netz und korrespondierende Verschlüsselungs-/Entschlüsselungsvorrichtung
Method for transmission of secure data through a network by exchanging encryption information and corresponding encryption/decryption device

(43) Date de publication de la demande: 28.02.2007
(73) Titulaire: Alcatel Lucent, 75007 Paris (FR)
(72) Inventeur: Fadili, Moulay, 95130 Franconville (FR); Zrihen, Jerremy, 92707 Colombes Cédex (FR); Moulehiawy, Abdelkrim, 75002 Paris (FR)
(74) Mandataire: Sciaux, Edmond

(56) Documents cités:
- CA-A1- 2 260 483
- US-A1- 2004 208 320
- DAVIS L M: "G3 facsimile security option-UK proposal for ITU-TS recommendation" SECURITY AND DETECTION, 1995., EUROPEAN CONVENTION ON BRIGHTON, UK, LONDON, UK,IEE, UK, 1995, pages 146-150, XP006529750 ISBN: 0-85296-640-7

## Description

L'invention concerne les équipements de communication de type modem (modulateur/démodulateur), en particulier utilisant le standard V8, et de type télécopieur (ou fax), en particulier de type G3, super G3 ou G4, chargés de se transmettre des données de façon sécurisée via au moins un réseau de communication impliquant une modulation/démodulation (comme par exemple ceux de type IP (protocole Internet), « fax relay » ou paquets).

Comme le sait l'homme de l'art, en l'absence d'une liaison sécurisée, par exemple au moyen d'un réseau privé virtuel utilisant un protocole de type IPSec (pour « IP Security » - défini par la spécification RFC 2401), la transmission de données (numériques) entre des équipements de communication, via un ou plusieurs réseaux IP, n'est pas sûre. Plus précisément, un équipement tiers connecté au réseau IP peut accéder aux données transmises lorsqu'elles transitent dans le réseau IP.

C'est notamment ce qui peut arriver à des données de type fac-similé qui sont générées par un télécopieur (ou « fax ») raccordé à une passerelle média Internet (ou « media gateway ») ou à un ordinateur, ou par un terminal de communication équipé d'une application de télécopie sur IP (ou « soft fax over IP »), comme par exemple un serveur.

L'inconvénient des liaisons sécurisées connues réside dans le fait qu'en présence de données devant transiter par plusieurs réseaux IP (ou paquets ou fax relay) il est nécessaire d'encrypter spécifiquement ces données au niveau de chaque réseau.

Le document DAVIS LM :"G3 facsimile security option-UK proposal for ITU-TS recommandation "SECURITY AND DETECTION, 1995. EUROPEAN CONVENTION ON BRIGHTON, UK, LONDON, UK, IEE, UK, 1995, PAGES 146-150, XP006529750 ISBN: 0-85296-640-7**"** décrit un procédé de transmission sécurisée de données entre un premier et un second télécopieur, consistant, en cas d'établissement d'un appel entre lesdits télécopieurs, à :
- à transmettre, de l'un desdits télécopieurs vers l'autre un premier message contenant des premières données propres à permettre la détermination d'une clé d'encryptage primaire, puis
- à déterminer, dans chaque télécopieur, ladite clé d'encryptage primaire en fonction desdites premières données, puis
- à transmettre du télécopieur ayant reçu ledit premier message vers l'autre télécopieur ayant envoyé ce premier message, un second message contenant des secondes données encryptées au moyen de ladite clé d'encryptage primaire.

Dans le télécopieur ayant reçu le premier message, ladite clé d'encryptage primaire est déterminée en utilisant un générateur de suite pseudo-aléatoire. Cette clé primaire est ensuite encryptée en fonction desdites premières donnée, puis elle est transmise sous cette forme cryptée à l'autre télécopieur.

Dans le télécopieur recevant le second message, la clef primaire est déterminée en décryptant la clef primaire cryptée qui lui a été transmise juste avant le second message. Pour chaque nouveau message à transmettre, la valeur de la clef primaire change, et il est donc nécessaire de recommencer une transmission de clef primaire cryptée.

L'invention a pour but de proposer un meilleur procédé de transmission sécurisée de données.

Elle propose à cet effet un procédé de transmission sécurisée de données entre un premier et un second équipements de communication, via au moins un réseau de communication impliquant une modulation/démodulation, consistant, en cas d'établissement d'un appel entre lesdits équipements en vue d'une transmission de données, à :
- à transmettre, de l'un desdits équipements vers l'autre desdits équipements, un premier message contenant dans un champ de spécificité non standard des premières données propres à permettre la détermination d'une clé d'encryptage primaire, puis
- à déterminer, dans chaque équipement apte à l'encryptage/décryptage de données, ladite clé d'encryptage primaire en fonction desdites premières données,
- à transmettre, de l'équipement ayant reçu ledit premier message vers l'équipement ayant envoyé ce premier message, un second message contenant des secondes données représentatives de son aptitude à assurer un encryptage/décryptage de données, lesdites secondes données étant encryptées au moyen de ladite clé d'encryptage primaire,
- puis à réception dudit second message, dans l'équipement ayant envoyé le premier message, à essayer de décrypter les secondes données au moyen de ladite clé d'encryptage primaire, de manière à déterminer si elles ont été encryptées au moyen de ladite clé d'encryptage primaire, et, si c'est le cas, à conclure que l'équipement qui a envoyé le second message est apte à assurer un encryptage/décryptage de données au moyen de ladite clé d'encryptage primaire,
- puis, si et seulement si lesdits équipements sont tous les deux aptes à l'encryptage/décryptage de données, à activer des moyens d'encryptage dans l'équipement ayant des données à transmettre, et activer des moyens de décryptage dans l'autre équipement qui doit recevoir ces données, ces moyens de cryptage et ces moyens de décryptage utilisant ladite clé d'encryptage primaire ;
caractérisé en ce que lesdites premières données sont représentatives d'une clé secondaire,
en ce que l'on détermine ladite clé d'encryptage primaire dans chaque équipement apte à l'encryptage/décryptage de données, en fonction de ladite clé secondaire par une fonction de calcul disponible dans chaque équipement apte à l'encryptage/ décryptage de données,
et en ce que lesdites secondes données représentatives de l'aptitude à assurer un encryptage/décryptage de données sont constituées par un mot alphanumérique connu de chaque équipement apte à l'encryptage/décryptage de données.

Le procédé selon l'invention peut comporter d'autres caractéristiques qui peuvent être prises séparément ou en combinaison, et notamment :
- les premières données peuvent constituer la clé secondaire ;
- on peut déterminer la clé d'encryptage primaire dans les équipements appelant et appelé au moyen d'une fonction choisie comportant une variable égale à la clé secondaire ;
- les secondes données (contenues dans le second message) peuvent être encryptées au moyen de la clé d'encryptage primaire ;
   ➢ à réception du second message, on peut alors analyser dans l'équipement récepteur les secondes données d'aptitude afin de déterminer si elles ont été encryptées au moyen de la clé d'encryptage primaire ;
      - à réception du second message, on peut décrypter les secondes données au moyen de la clé d'encryptage primaire, puis déterminer si le résultat du décryptage correspond à un encryptage au moyen de la clé d'encryptage primaire, afin de procéder au décryptage des données encryptées suivantes en cas de correspondance ;
      - les secondes données (contenues dans le second message) peuvent constituer une suite choisie de symboles ou un mot choisi encrypté(e) au moyen de ladite clé d'encryptage primaire ;
- on peut faire varier la clé d'encryptage primaire de façon identique et sensiblement simultanément dans les équipements appelant et appelé pendant la durée de la transmission des données encryptées ;
- en présence de données de type fac-similé et d'équipements appelant et appelé assurant une fonction de télécopieur de type G3, on peut intégrer les premières données dans un champ de spécificité non standard de type NSF d'un message contenant les champs DIS, CSI et NSF et les secondes données dans un message de type TCF ou dans un champ de type TCS d'un autre message ;
- en variante, en présence d'équipements appelant et appelés de type télécopieur super G3 ou G4 et/ou de type modem utilisant le standard V8, on peut intégrer dans l'équipement appelant les premières données dans un champ de spécificité non standard d'un message de type CM (pour « Call Menu »), et on peut intégrer dans l'équipement appelé les secondes données dans un message de type JM (pour « Join menu ») ou dans un champ d'un autre message.

L'invention propose également un dispositif d'encryptage/décryptage, pour des équipements de communication, propres chacun à mettre en oeuvre le procédé de transmission sécurisée de données présenté ci-avant.

L'invention propose également un équipement de communication, comme par exemple un télécopieur, un modem, une passerelle de communication, un serveur assurant la fonction de télécopieur, ou un ordinateur fixe ou portable, comprenant un dispositif d'encryptage/décryptage du type de celui présenté ci-avant.

L'invention est particulièrement bien adaptée, bien que de façon non exclusive, à la transmission de données de type fac-similé dans des réseaux de communication de type IP (protocole Internet), « fax relay » ou paquets. D'une manière générale l'invention s'applique à tout type de réseau dans lequel la transmission de données implique une modulation/démodulation.

D'autres caractéristiques et avantages de l'invention apparaitront à l'examen de la description détaillée ci-après, et des dessins annexés, sur lesquels :

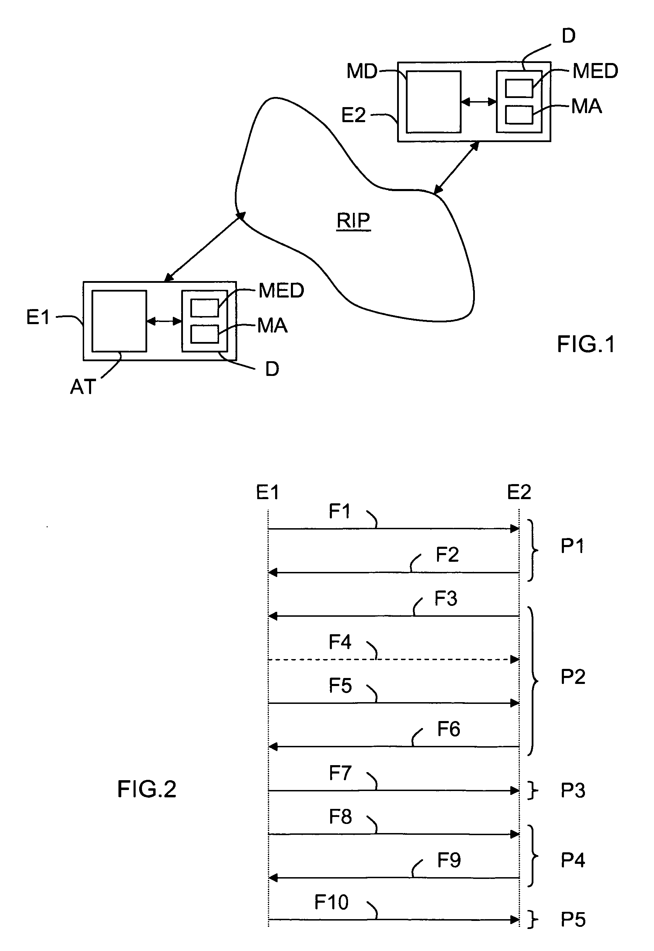

- la figure 1 illustre de façon très schématique un réseau IP auquel sont couplés, d'une part, un serveur de télécopie de type G3 équipé d'un exemple de réalisation d'un dispositif d'encryptage/décryptage selon l'invention, et d'autre part, un télécopieur de type G3 équipé d'un exemple de réalisation d'un dispositif d'encryptage/décryptage selon l'invention et couplée à un télécopieur,
- la figure 2 est un diagramme illustrant de façon très schématique les principales étapes d'une transmission de données de type fac-similé selon le standard T.30 de l'ITU-T, et

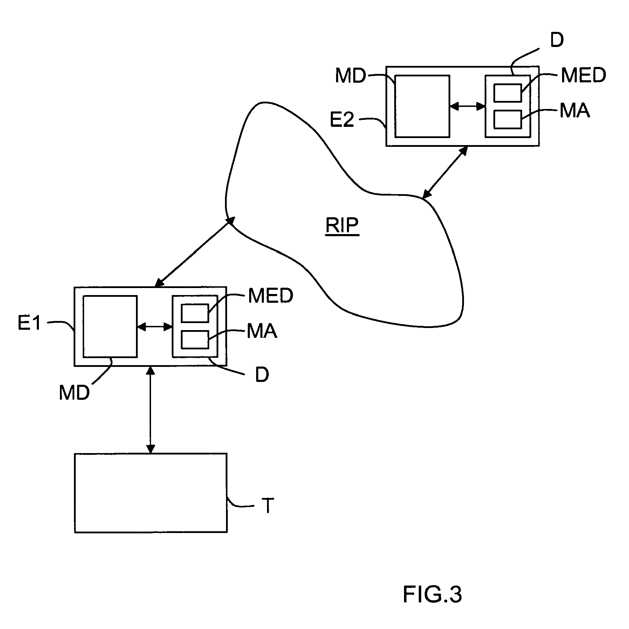

- la figure 3 illustre de façon très schématique un réseau IP auquel sont couplés, d'une part, un modem utilisant le standard V8, équipé d'un exemple de réalisation d'un dispositif d'encryptage/décryptage selon l'invention, et d'autre part, un télécopieur de type super G3, équipé d'un exemple de réalisation d'un dispositif d'encryptage/décryptage selon l'invention.

Les dessins annexés pourront non seulement servir à compléter l'invention, mais aussi contribuer à sa définition, le cas échéant.

L'invention a pour objet de permettre la transmission sécurisée de données entre deux équipements de communication de type modem ou télécopieur (ou « fax »), via un ou plusieurs réseaux de type IP, fax relay ou paquets, par encryptage de type bout-en-bout (ou « end to end »).

Pour ce faire, l'invention consiste à intégrer un dispositif d'encryptage/décryptage D dans des premier E1 et second E2 équipements de communication pouvant se raccorder à un réseau RIP, par exemple de type IP, fax relay ou paquets, afin de se transmettre des données (numériques) de façon sécurisée.

Dans ce qui suit, on considère à titre d'exemple non limitatif que le réseau RIP est un réseau IP.

On se réfère tout d'abord aux figures 1 et 2 pour décrire un premier exemple de mise en oeuvre de l'invention.

Dans ce premier exemple, on considère, à titre d'exemple non limitatif, que les données (numériques) transmises sont des données de type fac-similé générées par un serveur appelant E1 de type groupe 3 (ou G3) et équipé d'une application de télécopie sur IP (ou « soft fax over IP») AT, et destinées à un autre équipement de communication E2, comme par exemple un télécopieur (ou « fax ») appelé E2 également de type G3. Les données à transmettre sont donc représentatives de pages copiées. Mais l'invention n'est pas limitée à ces équipements de communication assurant une fonction de télécopieur (ou fax). Elle concerne en effet tous les équipements de communication de type télécopieur (notamment de type super G3 ou G4 et répondant par exemple au standard V34) ou de type modem (utilisant par exemple le standard V8) capables de se transmettre, via des réseaux impliquant une modulation/démodulation, des données (numériques), de toute origine, et éventuellement destinées à d'autres équipements, comme par exemple un ordinateur, fixe ou portable. L'invention concerne donc également les passerelles de communication Internet (ou IP), également appelées passerelles média Internet (ou « media gateways ») et comportant un modem de télécopie couplé à au moins un télécopieur.

Dans l'exemple non limitatif décrit ci-après en référence aux figures 1 et 2, le serveur E1 génère en interne, au moyen de son application de télécopie sur IP AT, des données numériques de type fac-similé à transmettre, tandis que le télécopieur E2 reçoit des données numériques de type fac-similé.

Chaque dispositif d'encryptage/décryptage D, selon l'invention, est couplé soit à un modem interne MD (dans le cas de E2), soit à une application de télécopie sur IP AT (dans le cas de E1), et comprend un module de traitement MT chargé d'intervenir chaque fois qu'une phase (P1) d'établissement d'appel a été effectuée entre son équipement (appelant ou appelé) et un autre équipement (appelé ou appelant).

Il est rappelé, comme cela est schématiquement illustré sur la figure 2, que la transmission de données de type fac-similé se fait conformément au standard T.30 de l'ITU-T. Cette transmission se déroule en cinq phases P1 à P5.

La première phase P1 est la phase dite d'établissement d'appel. L'équipement appelant, par exemple le serveur E1, transmet (flèche F1) à l'équipement appelé E2, ici un télécopieur, un éventuel signal d'appel (optionnel) appelé CNG (pour « calling tone »), afin de lui indiquer qu'il veut lui transmettre des données de type fac-similé. Le télécopieur appelé E2 répond à ce signal d'appel CNG en transmettant (flèche F2) au serveur appelant E1 un signal de réponse appelée CED (pour « called terminal identification answer tone »), ou bien un signal de réponse à 2100 Hz modulé (en amplitude et/ou en phase, de type ANS AM, ANS PM ou ANS AM/PM), afin de lui indiquer qu'il est prêt à réceptionner ses données.

La deuxième phase P2 est la phase dite de contrôle et d'échange de capacités (ou procédure de pré-transmission de données). Elle est destinée à permettre l'identification des capacités que va utiliser chaque équipement E1, E2 et la définition des conditions de transmission. Le télécopieur appelé E2 transmet (flèche F3) au serveur appelant E1, par exemple, un message contenant le champ DIS (pour « Digital Identification Signal ») contenant des informations caractérisant ses capacités, le champ CSI (pour « Called Subscriber Identification ») contenant des informations définissant l'identifiant de l'appelé, et le champ de facilité non standard NSF (pour « Non-Standard Facilities ») contenant notamment des informations constructeur. Puis, le serveur appelant E1 transmet (flèche F4) au télécopieur appelé E2, par exemple, des informations appelées DCS (pour « Digital Command Signal »), qui définissent les commandes de configuration qui correspondent aux capacités définies par le DIS, et des informations appelées TCS (pour « Transmitting Subscriber Identification », qui définissent l'identifiant de l'appelant. Ensuite, le serveur appelant E1 transmet (flèche F5) au télécopieur appelé E2 un message, par exemple appelé TCF (pour « Training Check »), qui contient une commande modulée selon la modulation dite T.4 et destinée à vérifier la ligne en fournissant une indication sur la possibilité d'utiliser un canal de transmission avec un débit donné. Enfin, le télécopieur appelé E2 transmet (flèche F6) au serveur appelant E1, par exemple, un message de confirmation de réception appelé CFR (pour « Confirmation to Receive ») destiné à signaler que la deuxième phase P2 s'est correctement effectuée et que les données peuvent maintenant être transmises.

La troisième phase P3 est la phase dite de transmission des données. Elle se fait conformément au standard appelé T.4 du serveur appelant E1 vers le télécopieur appelé E2 (flèche F7).

La quatrième phase P4 est la phase dite de fin de transmission des données d'une page et de signalisation multi-pages (ou procédure de post-transmission). Lorsqu'une page a été intégralement transmise, le serveur appelant E1 transmet (flèche F8) au télécopieur appelé E2 un message, par exemple appelé EOP (pour « End Of Procedure »), destiné à signaler la transmission complète de la dernière page et demandant une confirmation avant de mettre fin à l'appel. Puis, le télécopieur appelé E2 transmet (flèche F9) au serveur appelant E1 un message de confirmation de fin de réception complète, appelé MCF (pour « Message Confirmation »).

La cinquième phase P5 est la phase dite de fin d'appel. Le serveur appelant E1 transmet (flèche F10) au télécopieur appelé E2 un message appelé DCN (pour « Disconnect ») lui signalant qu'il met fin à la communication.

Il est important de noter que les différentes étapes présentées ci-avant ne représentent pas de façon exhaustive toutes les informations qui sont effectivement échangées entre les deux équipements appelant et appelé. Seules les principales informations et principaux messages et/ou les informations et messages utiles à l'invention ont été mentionnés. La description complète des cinq phases P1 à P5 peut notamment être trouvée dans le document de l'ITU-T « T.30 - Procedure for document facsimile transmission in the general switched telephone network », juillet 2003.

Le module de traitement MT intervient plus précisément au niveau de la deuxième phase P2, c'est-à-dire avant le début de la transmission des données (ici de type fac-similé).

Plus précisément, une fois que la première phase (d'établissement d'appel) P1 est achevée (flèches F1 et F2 de la figure 2), le module de traitement MT de l'équipement appelé E2 (ici le télécopieur) génère, à destination de l'équipement appelant (ici le serveur E1), un premier message (ici de type DIS, CSI et NSF - flèche F3 de la figure 2) contenant dans un champ de spécificité non standard de type NSF des premières données destinées à permettre au module de traitement MT du serveur appelant E1 de déterminer une clé d'encryptage primaire K_{M} de M bits (par exemple M = 128 bits).

Il est important de noter que le premier message (de type DIS, CSI et NSF) peut être soit un message DIS, CSI et NSF standard dans lequel on adjoint aux données du champ NSF les premières données, soit un nouveau message DIS, CSI et NSF spécifique.

Puis, les modules de traitement MT du télécopieur appelé E2 et du serveur appelant E1 déterminent chacun de leur côté la clé d'encryptage primaire K_{M} en fonction des premières données.

Il est important de noter que les premières données qui sont contenues dans le premier message (DIS, CSI et NSF - flèche F3) peuvent être représentatives d'une clé secondaire K_{N} de N bits. Par « premières données représentatives » on entend ici soit des données désignant une clé secondaire K_{N}, soit des données constituant la clé secondaire K_{N}. Dans le premier cas (désignation), le module de traitement MT détermine la clé secondaire K_{N} dans une table en fonction de la valeur des premières données, tandis que dans le second cas le module de traitement MT dispose directement de la clé secondaire K_{N}.

Lorsqu'une clé secondaire K_{N} est définie par les premières données, chaque module de traitement MT détermine la clé primaire d'encryptage K_{M} en fonction de cette clé secondaire K_{N}. Pour ce faire, chaque module de traitement MT dispose d'une même fonction de calcul choisie G_{NM}, comportant une variable égale à la clé secondaire K_{N}, et telle que G_{NM}(K_{N}) = K_{M}. Tout type de fonction G_{NM} peut être utilisé à cet effet, et notamment une fonction de type pseudo-aléatoire.

Afin de ne pas retarder de façon sensible la transmission des données, le nombre N de bits de la clé secondaire K_{N} est par exemple égal à 24.

Une fois que le serveur appelant E1 a reçu le message contenant le champ NSF « augmenté » des premières données, il transmet au télécopieur appelé E2 les informations DCS et TCS (flèche F4). Puis, le module de traitement MT du serveur appelant E1 génère des secondes données représentatives de son aptitude à assurer un encryptage de données à transmettre. Ces secondes données sont intégrées dans un second message qui est préférentiellement le message TCF (ou dans le champ de type TCS d'un autre message), que le serveur appelant E1 transmet (flèche F5) au télécopieur appelé E2.

Les secondes données, qui sont intégrées dans un second message, peuvent se présenter sous différentes formes.

Il peut par exemple s'agir de données signifiant l'acceptation de l'encryptage utilisé (bien entendu lorsque l'équipement appelant E1 comporte un dispositif D selon l'invention). Dans ce cas, lorsque le dispositif D de l'équipement appelé E2 reçoit les secondes données, il sait immédiatement si l'équipement appelant E1 comprend un dispositif D du même type que le sien. En cas d'identité des types, le module de traitement MT du dispositif D de l'équipement appelé E2 active un module d'encryptage/décryptage MED qu'il comprend afin qu'il soit prêt à décrypter les données encryptées (ici de type fac-similé) qui doivent être transmises par l'équipement appelant E1 pendant la troisième phase P3.

En variante, les secondes données peuvent être des données à analyser. Dans ce cas, le module de traitement MT du dispositif D de l'équipement appelé E2 comporte un module d'analyse MA chargé d'analyser les secondes données contenues dans le message TCF (ou dans le champ TCS) reçu, afin de déterminer si le dispositif D de l'équipement appelant E1 est du même type que le sien.

Par exemple, le module d'analyse MA analyse les secondes données d'aptitude afin de déterminer si elles ont été encryptées au moyen de la clé d'encryptage primaire K_{M}. A cet effet, les secondes données d'aptitude peuvent constituer un mot (alphanumérique) choisi, connu de tous les modules d'analyse MA, et encrypté au moyen de la clé d'encryptage primaire K_{M}. En d'autres termes, le module de traitement MT, du dispositif D de l'équipement appelant E1, utilise son module d'encryptage/décryptage MED pour encrypter le mot choisi au moyen de la clé d'encryptage primaire K_{M}, le résultat de cet encryptage constituant alors les secondes données à intégrer dans le second message.

Dans ce cas, lorsque le dispositif D de l'équipement appelé E2 reçoit les secondes données, il les communique à son module de traitement MT, afin que son module d'encryptage/décryptage MED les décrypte au moyen de la clé d'encryptage primaire K_{M}. Puis, ce module de traitement MT transmet le résultat de ce décryptage à son module d'analyse MA afin qu'il le compare au mot choisi qu'il connaît.

Lorsque le second message est de type TCF, les secondes données qu'il contient sont représentatives d'une suite de symboles cryptés par le module d'encryptage/décryptage MED du dispositif D de l'équipement appelant E1, au moyen de la clé d'encryptage primaire K_{M}, sous le contrôle de son module de traitement MT. Il est en effet rappelé que, selon le standard T.30, un message TCF classique comprend une suite de symboles qui, avant modulation, se présentent sous la forme d'une suite de zéros pendant une durée minimale choisie.

Dans ce cas, lorsque le dispositif D de l'équipement appelé E2 reçoit les secondes données, il les communique à son module de traitement MT, afin que son module d'encryptage/décryptage MED les décrypte au moyen de la clé d'encryptage primaire K_{M}. Puis, ce module de traitement MT transmet le résultat de ce décryptage et certaines secondes données à son module d'analyse MA.

Le module d'analyse MA effectue par exemple ses comparaisons en tirant partie de la propriété précitée des symboles (données) démodulé(e)s des messages TCF. Ils doivent en effet se présenter sous la forme d'un jeu de zéros successifs pendant une durée minimale choisie. Par conséquent, si l'on désigne par Dp le p-ième bloc de données TCF reçu par le module de traitement MT (et représentant certaines des secondes données), par Dkp le résultat du décryptage du p-ième bloc Dp par le module d'encryptage/ décryptage MED, et par R(p) le résultat de la comparaison des Dp et Dkp par rapport à la valeur 0 (zéro) effectuée par le module d'analyse MA, alors le module d'analyse MA délivre soit un R(p) dont la valeur signale un encryptage connu chaque fois que Dkp est égal à 0, soit un R(p) dont la valeur signale une absence d'encryptage chaque fois que Dp est égal à 0, soit un R(p) dont la valeur signale une erreur dans tous les autres cas.

Si à la fin du message TCF le nombre de bits R(p) consécutifs dont la valeur signale un encryptage connu et qui ont été obtenus dans l'intervalle choisi (défini par le standard T.30) est supérieur ou égal au nombre choisi (également défini par le standard T.30) alors le module de traitement MT en déduit que l'équipement appelant E1 comprend un dispositif D du même type que le sien. Dans ce cas, le module de traitement MT active alors son module d'encryptage/décryptage MED afin qu'il soit prêt à décrypter les données encryptées (ici de type fac-similé) qui doivent être transmises par l'équipement appelant E1 pendant la troisième phase P3.

Si à la fin du message TCF le nombre de bits R(p) consécutifs dont la valeur signale une absence d'encryptage et qui ont été obtenus dans l'intervalle choisi est supérieur ou égal au nombre choisi alors le module de traitement MT en déduit que l'équipement appelant E1 ne comprend pas de dispositif D du même type que le sien. Dans ce cas, le module de traitement MT n'active pas son module d'encryptage/décryptage MED afin que le télécopieur E2 reçoive classiquement (sans cryptage) les données (ici de type fac-similé) transmises par l'équipement appelant E1 pendant la troisième phase P3.

Enfin, si l'on est dans aucune des deux situations précédentes, l'équipement appelé E2 demande à l'équipement appelant E1 de lui transmettre un nouveau message TCF.

Afin de renforcer encore plus la sécurisation des données transmises, les modules de traitement MT, des dispositifs D implantés dans les équipements appelant E1 et appelé E2, peuvent faire varier la clé d'encryptage primaire K_{M} que leurs modules d'encryptage/décryptage MED utilisent respectivement pour encrypter et décrypter les données (ici de type fac-similé), pendant la durée de la troisième phase P3. Ces variations s'effectuent de façon identique et sensiblement simultanément pendant toute la durée de la transmission des données encryptées (c'est-à-dire pendant toute la durée de la troisième phase P3).

Pour ce faire, chaque module d'encryptage/décryptage MED peut par exemple disposer d'une même fonction choisie qui fait varier la clé d'encryptage primaire K_{M} en fonction de sa valeur précédente : K_{M}(n) = f(K_{M}(n-1)).

Dans le cas statique (sans variation) la fonction f est la fonction identité. Dans le cas dynamique (variation) la fonction f peut par exemple être un générateur pseudo-aléatoire (dans ce cas les équipements appelant E1 et appelé E2 disposent de générateurs pseudo-aléatoires qui évoluent de la même façon), ou toute autre fonction (connue des équipements appelant E1 et appelé E2).

Il est important de noter que le module d'encryptage/décryptage MED est préférentiellement agencé pour encrypter de façon séparée les paquets de données à transmettre. Cela permet au module de traitement MT d'utiliser les numéros de séquence qui sont attribués par la couche UDP aux paquets encryptés afin de reconstituer rapidement, après décryptage, une séquence ordonnée de paquets y compris lorsqu'un ou plusieurs paquets ont été perdus lors du transit dans le(s) réseau(x) RIP, ici de type IP. Ces paquets perdus ne pouvant pas être retrouvés dans un réseau RIP, la séquence ordonnée est reconstituée en classant les paquets en fonction de leurs numéros de séquence respectifs et en omettant dans la séquence ceux qui ont été perdus.

Dans ce qui précède on a décrit une application de l'invention au cas où les équipements appelant E1 et appelé E2 assurent tous les deux une fonction de télécopieur de type groupe 3 (ou G3). Mais, comme indiqué précédemment, l'invention s'applique également au cas où les équipements appelant E1 et appelé E2 sont des modem(s) utilisant le standard V8 et/ou télécopieur(s) du type super groupe 3 (ou super G3) ou G4, comme illustré sur la figure 3.

Dans le second exemple, illustré sur la figure 3, l'équipement appelant E1 est un modem utilisant le standard V8 et couplé à un terminal T, tel qu'un ordinateur fixe ou portable ou un serveur qui génère en interne des données numériques de type fac-similé à transmettre, tandis que l'équipement appelé E2 est un télécopieur de type super G3 pouvant recevoir des données numériques de type fac-similé en provenance du modem E1.

Il est important de noter que l'invention n'est pas limitée dans ce second exemple à la seule transmission de données de type fac-similé. En effet, en présence de deux modems utilisant le standard V8 d'autres types de données peuvent être transmis.

Chaque dispositif d'encryptage/décryptage D, selon l'invention, comprend un module de traitement MT chargé d'intervenir chaque fois qu'une phase d'établissement d'appel a été effectuée entre son équipement (appelant ou appelé) et un autre équipement (appelé ou appelant), c'est-à-dire avant le début de la transmission des données (ici de type fac-similé).

Plus précisément, une fois que la phase d'établissement d'appel est achevée, le module de traitement MT de l'équipement appelant E1 (ici le modem) génère, à destination de l'équipement appelé E2 (ici le télécopieur), un premier message, par exemple de type CM (pour « Call Menu » - standard V8), contenant dans un champ de spécificité non standard de type NSF des premières données destinées à permettre au module de traitement MT du télécopieur appelé E2 de déterminer une clé d'encryptage primaire K_{M} de M bits (par exemple M = 128 bits).

Il est important de noter que le premier message (de type CM) peut être soit un message CM standard aux données duquel sont adjointes les premières données, soit un nouveau message CM spécifique.

Lorsque le module de traitement MT du télécopieur appelé E2 reçoit le premier message soit il est équipé d'un dispositif D et dans ce cas il peut déterminer la clé d'encryptage primaire K_{M} en fonction des premières données reçues et activer son module d'encryptage/décryptage MED afin qu'il puisse procéder au décryptage des données cryptées de type fac-similé qui vont lui être transmises par le modem appelant E1, soit il n'est pas équipé d'un dispositif D et dans ce cas il ignore les premières données reçues et attend que le modem appelant E1 lui transmette des données non cryptées de type fac-similé.

Comme dans l'exemple précédemment décrit en référence aux figures 1 et 2, les premières données qui sont contenues dans le premier message (CM) peuvent être représentatives d'une clé secondaire K_{N} de N bits (par exemple N = 24). Lorsque cette clé secondaire K_{N} est définie par les premières données, chaque module de traitement MT détermine la clé primaire d'encryptage K_{M} en fonction de cette clé secondaire K_{N}. Pour ce faire, chaque module de traitement MT dispose d'une même fonction de calcul choisie G_{NM}, comportant une variable égale à la clé secondaire K_{N}, et telle que G_{NM}(K_{N}) = K_{M}. Tout type de fonction G_{NM} peut être utilisé à cet effet, et notamment une fonction de type pseudo-aléatoire.

Une fois que le télécopieur appelé E2 a reçu le premier message CM « augmenté » des premières données il adresse au modem appelant E1 un second message, par exemple de type JM (pour « Join Menu » - standard V8). Ce second message JM est soit de type standard si le télécopieur appelé E2 ne possède pas de dispositif D, soit « augmenté », par le module de traitement MT du dispositif D du télécopieur appelé E2, de secondes données représentatives de l'aptitude de son télécopieur E2 à assurer un encryptage/décryptage de données. Ces secondes données sont intégrées dans un second message de type JM ou dans un champ d'un autre message.

En cas d'absence de secondes données dans le second message, le dispositif D de l'équipement appelant E1 en déduit immédiatement que le télécopieur E2 n'est pas équipé d'un dispositif D, si bien qu'il n'active pas sa fonction d'encryptage. Le modem E1 transmet alors au télécopieur E2 des données de type fac-similé dépourvues de cryptage.

En présence de secondes données dans le second message, le module de traitement MT du dispositif D de l'équipement appelant E1 demande à son module d'analyse MA d'effectuer leur analyse. Cette analyse peut se faire d'une façon similaire à l'un des modes d'analyse décrits précédemment en référence aux figures 1 et 2 et fonction du type des secondes données reçues.

Si l'analyse effectuée indique que le télécopieur appelé E2 est apte à assurer le décryptage, le module de traitement MT du dispositif D de l'équipement appelant E1 détermine la clé d'encryptage primaire K_{M} en fonction des premières données (qu'il a précédemment transmises au télécopieur appelé E2), puis il active son module d'encryptage/décryptage MED afin qu'il soit prêt à encrypter les données (ici de type fac-similé) qui doivent être transmises à l'équipement appelé E2, au moyen de la clé d'encryptage primaire K_{M}.

Si l'analyse effectuée indique que le télécopieur appelé E2 n'est pas apte à assurer le décryptage, le module de traitement MT du dispositif D de l'équipement appelant E1 n'active pas son module d'encryptage/décryptage MED. Le modem E1 transmet alors au télécopieur E2 des données de type fac-similé dépourvues de cryptage.

On notera que, comme dans le premier exemple précédemment décrit en référence aux figures 1 et 2, on peut également dans ce second exemple renforcer la sécurisation des données transmises en faisant varier la clé d'encryptage primaire K_{M} utilisée par les modules d'encryptage/décryptage MED pour encrypter et décrypter les données (ici de type fac-similé).

Par ailleurs, comme dans le premier exemple précédemment décrit en référence aux figures 1 et 2, le module d'encryptage/décryptage MED peut être agencé pour encrypter de façon séparée les paquets de données à transmettre.

Les premier et second dispositifs d'encryptage/décryptage D selon l'invention, et notamment leur module de traitement MT, peuvent être réalisés sous la forme de circuits électroniques, de modules logiciels (ou informatiques), ou d'une combinaison de circuits et de logiciels.

On a décrit ci-avant des dispositifs d'encryptage/décryptage permettant de mettre en oeuvre l'invention. Mais, cette invention peut être également considérée sous la forme d'un procédé de transmission sécurisée de données. Celui-ci peut être mis en oeuvre à l'aide des premier et seconds dispositifs d'encryptage/décryptage D présentés ci-avant. Les fonctions et sous-fonctions principales et optionnelles assurées par les étapes de ce procédé étant sensiblement identiques à celles assurées par les différents moyens constituant les premier et seconds dispositifs, seules seront résumées ci-après les étapes mettant en oeuvre les fonctions principales du procédé selon l'invention.

Ce procédé consiste, en cas d'établissement d'un appel entre des équipements appelant E1 et appelé E2 (en vue d'une transmission de données, par exemple de type fac-similé) :
- à transmettre, de l'un des équipements appelant E1 et appelé E2 vers l'autre équipement, un premier message contenant des premières données destinées à permettre la détermination d'une clé d'encryptage primaire K_{M},
- à déterminer dans chaque équipement E1 et/ou E2 apte à l'encryptage/décryptage de données, la clé d'encryptage primaire K_{M} en fonction des premières données,
- à transmettre, de l'équipement ayant reçu le premier message vers l'autre équipement ayant transmis ledit premier message, un second message contenant des secondes données représentatives de son aptitude à assurer un encryptage/décryptage de données, puis
- lorsque les équipements appelant E1 et appelé E2 sont aptes à l'encryptage/décryptage de données, à encrypter les données à transmettre dans l'équipement appelant E1, puis à transmettre ces données encryptées vers l'équipement appelé E2, via le(s) réseau(x) RIP, et à décrypter les données encryptées dans l'équipement appelé E2 au moyen de la clé d'encryptage primaire K_{M}.

L'invention présente un certain nombre d'avantages, parmi lesquels :
- une mise en oeuvre à coût réduit,
- une intégration particulièrement facile,
- une utilisation transparente vis-à-vis des utilisateurs finaux,
- un unique encryptage de type bout-en-bout qui n'impose plus de recourir à des équipements spécifiques d'encryptage chaque fois que des données transitent par des réseaux IP différents,
- une interopérabilité native vis-à-vis des autres équipements.

L'invention ne se limite pas aux modes de réalisation de dispositif d'encryptage/décryptage, équipement de communication et procédé de transmission sécurisée de données décrits ci-avant, seulement à titre d'exemple, mais elle englobe toutes les variantes que pourra envisager l'homme de l'art dans le cadre des revendications ci-après.

## Revendications

1. Procédé de transmission sécurisée de données entre un premier et un second équipements de communication (E1, E2), via au moins un réseau de communication (RIP) impliquant une modulation/ démodulation, consistant, en cas d'établissement d'un appel entre lesdits équipements en vue d'une transmission de données, à :
- à transmettre (F3), de l'un desdits équipements vers l'autre desdits équipements, un premier message contenant dans un champ de spécificité non standard des premières données propres à permettre la détermination d'une clé d'encryptage primaire, puis
- à déterminer, dans chaque équipement (E1, E2) apte à l'encryptage/décryptage de données, ladite clé d'encryptage primaire en fonction desdites premières données,
- à transmettre (F4), de l'équipement ayant reçu ledit premier message vers l'équipement ayant envoyé ce premier message, un second message contenant des secondes données représentatives de son aptitude à assurer un encryptage/décryptage de données, lesdites secondes données étant encryptées au moyen de ladite clé d'encryptage primaire,
- puis à réception dudit second message, dans l'équipement ayant envoyé le premier message, à essayer de décrypter les secondes données au moyen de ladite clé d'encryptage primaire, de manière à déterminer si elles ont été encryptées au moyen de ladite clé d'encryptage primaire, et, si c'est le cas, à conclure que l'équipement qui a envoyé le second message est apte à assurer un encryptage/décryptage de données au moyen de ladite clé d'encryptage primaire,
- puis, si et seulement si lesdits équipements sont tous les deux aptes à l'encryptage/décryptage de données, à activer des moyens d'encryptage dans l'équipement ayant des données à transmettre, et activer des moyens de décryptage dans l'autre équipement qui doit recevoir ces données, ces moyens de cryptage et ces moyens de décryptage utilisant ladite clé d'encryptage primaire ;
**caractérisé en ce que** lesdites premières données sont représentatives d'une clé secondaire,
**en ce que** l'on détermine ladite clé d'encryptage primaire dans chaque équipement (E1, E2) apte à l'encryptage/ décryptage de données, en fonction de ladite clé secondaire par une fonction de calcul disponible dans chaque équipement (E1, E2) apte à l'encryptage/ décryptage de données,
**en ce que** lesdites secondes données représentatives de l'aptitude à assurer un encryptage/décryptage de données sont constituées par un mot alphanumérique connu de chaque équipement (E1, E2) apte à l'encryptage/décryptage de données.

2. Procédé selon la revendication 1, **caractérisé en ce que** lesdites premières données constituent ladite clé secondaire.

3. Procédé selon la revendication 1, **caractérisé en ce que** l'on fait varier ladite clé d'encryptage primaire de façon identique et sensiblement simultanément dans lesdits équipements appelant (E1) et appelé (E2) pendant la durée de la transmission des données encryptées.

4. Procédé selon la revendication 1, **caractérisé en ce qu'**en présence de données de type fac-similé et d'équipements appelant (E1) et appelé (E2) assurant une fonction de télécopieur de type G3, on intègre dans ledit équipement appelé (E2) lesdites premières données dans un champ de spécificité non standard de type NSF d'un message contenant des champs DIS, CSI et NSF et on intègre dans ledit équipement appelant (E1) lesdites secondes données dans un message de type TCF ou dans un champ de type TCS d'un autre message.

5. Procédé selon la revendication 1, **caractérisé en ce qu'**en présence d'équipements appelant (E1) et appelé (E2) de type télécopieur de type super G3 ou G4 et/ou de type modem utilisant le standard V8, on intègre dans ledit équipement appelant (E1) lesdites premières données dans un champ de spécificité non standard d'un message de type Call Menu , et on intègre dans ledit équipement appelé (E2) lesdites secondes données dans un message de type Join Menu ou dans un champ d'un autre message.

6. Dispositif d'encryptage/décryptage de données (D) pour un premier équipement de communication propre à échanger des données avec un second équipement de communication d'un type équivalent, via au moins un réseau de communication (RIP) impliquant une modulation/démodulation, comprenant des moyens de traitement (MT) agencés pour :
i) en cas d'établissement d'un appel entre le premier équipement et le second équipement, en vue d'une transmission de données entre ces deux équipements, pour générer à destination dudit second équipement un premier message (F3) contenant dans un champ de spécificité non standard des premières données propres à permettre la détermination d'une clé d'encryptage primaire, et pour déterminer cette clé d'encryptage primaire en fonction desdites première données, puis,
ii) en cas de réception en provenance dudit second équipement d'un second message (F5) contenant des secondes données représentatives de son aptitude à assurer un encryptage de données à transmettre, suivie de la réception de données encryptées, activer des moyens de décryptage (MED) pour décrypter lesdites données encryptées reçues, au moyen de ladite clé d'encryptage primaire, et activer des moyen de cryptage (MED) pour crypter des données à transmettre audit second équipement, au moyen de ladite clé d'encryptage primaire ;
**caractérisé en ce que** les dits moyens de traitement (MT) sont agencés en outre pour :
recevoir des premières données qui sont représentatives d'une clé secondaire,
déterminer ladite clé d'encryptage primaire en fonction de ladite clé secondaire par une fonction de calcul disponible dans le premier équipement ;
et recevoir des secondes données qui sont constituées par un mot alphanumérique connu de ce premier équipement.

7. Dispositif selon la revendication 6, **caractérisé en ce que** lesdites premières données constituent ladite clé secondaire.

8. Dispositif selon la revendication 6, **caractérisé en ce que** lesdits moyens de traitement (MT) sont agencés pour générer des seconds messages contenant des secondes données encryptées au moyen de ladite clé d'encryptage primaire.

9. Dispositif selon la revendication 6, **caractérisé en ce que** lesdits moyens de traitement (MT) comprennent des moyens d'analyse (MA) agencés, en cas de réception d'un second message, pour analyser les secondes données d'aptitude qu'il contient de manière à déterminer si elles ont été encryptées au moyen de ladite clé d'encryptage primaire.

10. Dispositif selon la revendication 9, **caractérisé en ce que** lesdits moyens de traitement (MT) sont agencés, en cas de réception d'un second message, pour décrypter lesdites secondes données au moyen de ladite clé d'encryptage primaire, et **en ce que** lesdits moyens d'analyse (MA) sont agencés pour déterminer si le résultat du décryptage correspond à un encryptage au moyen de ladite clé d'encryptage primaire, afin d'autoriser lesdits moyens de traitement (MT) à procéder en cas de correspondance à l'encryptage des données à transmettre ou au décryptage des données encryptées transmises.

11. Dispositif selon l'une des revendications 9 ou 10, **caractérisé en ce que** lesdits moyens de traitement (MT) sont agencés pour intégrer dans ledit second message des secondes données constituant une suite choisie de symboles encryptée au moyen de ladite clé d'encryptage primaire.

12. Dispositif selon la revendication 6, **caractérisé en ce que** lesdits moyens de traitement (MT) sont agencés pour faire varier ladite clé d'encryptage primaire pendant la durée de la transmission des données encryptées.

13. Dispositif selon la revendication 6, **caractérisé en ce qu'**en présence de données de type fac-similé, lesdits moyens de traitement (MT) sont agencés pour intégrer lesdites premières données dans un champ de spécificité non standard de type NSF d'un message contenant des champs DIS, CSI et NSF; et lesdites secondes données dans un message de type TCF ou dans un champ de type TCS d'un autre message.

14. Dispositif selon la revendication 6, **caractérisé en ce qu'**en présence de données de type fac-similé, lesdits moyens de traitement (MT) sont agencés pour intégrer lesdites premières données dans un champ de spécificité non standard d'un message de type Call Menu, et lesdites secondes données dans un champ de spécificité non standard d'un message de type Join Menu ou dans un champ d'un autre message.

15. Equipement de communication (E1,E2) pour un réseau de communication à protocole Internet (RIP), **caractérisé en ce qu'**il comprend un dispositif d'encryptage/décryptage (D) selon l'une des revendications 6 à 14.

## Claims

1. A method for securely transmitting data between a first and second communication device (E1, E2), through at least one communication network (RIP) involving a modulation/demodulation, consisting, when call is established between the devices for the transmission of data, of:
Transmitting (F3), from one of the devices to the other of the devices, a first message containing a field of non-standard specificity with data making it possible to determine a primary encryption key, then Determining, within each device (E1, E2) capable of encrypting / decrypting data, said primary encryption key in relation to these first data,
Transmitting (F4), from the device having received said first message to the device having sent the first message, a second message containing second data representing its capability of encrypting/decrypting data, said second data being encrypted by means of said primary encryption key,
Then upon receipt of said second message, within the device having sent the first message, attempting to decrypt the second data using said primary encryption key, so as to determine whether or not they were encrypted using said primary encryption key, and if so, concluding that the device that sent the second message is capable of encrypting/decrypting data using said primary encryption key,
Then, if and only if both devices are capable of encrypting/decrypting data, activating the encryption means in the device having data to transmit, and activating the decryption means in the other device that will receive these data, these encryption and decryption means using said primary encryption key;
**Characterised in that** these first data represent a secondary key,
**In that** it is possible to determine said primary encryption key within each device (E1, E2) capable of encrypting/ decrypting data, in relation to said secondary key by a calculation function available within each device (E1, E2) capable of encrypting/decrypting data,
**In that** the second data representing the capability of encrypting/decrypting data consist of an alphanumeric word known to each device (E1, E2) capable of encrypting/decrypting data.

2. A method according to claim 1, **characterised in that** these first data constitute said secondary key.

3. A method according to claim one, **characterised in that** said primary encryption key can be varied identically and simultaneously in both the calling (E1) and called device (E2) during the transmission of the encrypted data.

4. A method according to claim 1; **characterised in that** in the presence of facsimile data and calling (E1) and called (E2) devices carrying out a G3 fax fonction, the first data are incorporated into said called device (E2) in an NSF field of non-standard specificity of a message containing DIS, CSI, and NSF fields, and the second data are incorporated into said calling device (E1) in a TCF message or in a TCS field of another message.

5. A method according to claim 1, **characterised in that** in the presence of calling (E1) and called (E2) devices carrying out super G3 or G4 fax functions and/or operating as a modem using the V8 standard, the first data are incorporated into said 30 calling device (E1) in a field of non-standard specificity of a Call Menu message, and the second data are incorporated into a Join Menu message or into a field of another message in said called device (E2).

6. A data encryption/decryption device (D) for a first communication device able to exchange data with a second communication device of an equivalent type, through at least one communication network (RIP) involving a modulation/demodulation, comprising processing means (MT) configured for:
i) When a call is established between the first device and the second device, for the transmission of data between the two devices, generating a first message (F3), to be sent to said second device, containing in a field of non-standard specificity with first data to enable the détermination of a primary encryption key, and determining this primary encryption key in relation to these first data, then,
ii) Upon receiving a second message (F5), from said second device, containing second data representing its capacity for encrypting data to be sent, followed by the receipt of encrypted data, activating decryption means (MED) to decrypt said received encrypted data, using said primary encryption key, and activating encryption means (MED) to encrypt data to be sent to said second device, using said primary encryption key;
**Characterised in that** these processing means (MT) are also configured to:
Receive first data representing a secondary key,
Determine said primary encryption key in relation to said secondary key by a calculation function available within the first device;
And receive second data constituting an alphanumeric word known to this first device.

7. A device according to claim 6, **characterised in that** these first data constitute said secondary key.

8. A device according to claim 6, **characterised in that** said processing means (MT) are configured to generate second messages containing second data encrypted using said primary encryption key.

9. A device according to claim 6 **characterised in that** said processing means (MT) comprise analysis means (MA) configured, upon receipt of a second message, to analyse the second capacity data contain **in that** second message so as to determine whether or not they were encrypted using said primary encryption key.

10. A device according to claim 9, **characterised in that** said processing means (MT) are configured, upon receipt of a second message, to decrypt said second data using said primary encryption key, and **in that** said analysis means (MA) are configured to determine whether or not the result of the decryption corresponds to an encryption using said primary encryption key, in order to authorise said processing means (MT), in the event of a match, to encrypt data to be sent or to decrypt encrypted data sent.

11. A device according to claim 9 or 10, **characterised in that** said processing means (MT) are configured to incorporate second data constituting a selected set of symbols encrypted using said primary encryption key into said second message.

12. A device according to claim 6 **characterised in that** said processing means (MT) are configured to vary said primary encryption key while the encrypted data are being transmitted.

13. A device according to claim 6, **characterised in that** in the presence of facsimile data, said processing means (MT) are configured to incorporate the first data into an NSF field of non-standard specificity of a message containing DIS, CSI, and NSF fields, and the second data are incorporated into a TCF message or in a TCS field of another message.

14. A device according to claim 6, **characterised in that** in the presence of facsimile data, said processing means (MT) are configured to incorporate the first data into a field of non-standard specificity of a Call Menu message, and the second data into a field of non-standard specificity of a Join Menu message, or into a field of another message.

15. A communication device (E1, E2) for an Internet protocol communication network (RIP), **characterised in that** it comprises an encryption/decryption device (D) according to one of the claims 6 to 14.

## Patentansprüche

1. Verfahren zur sicheren Übertragung von Daten zwischen einem ersten und einem zweiten Kommunikationsgerät (E1, E2) über mindestens ein Kommunikationsnetzwerk (RIP), welches eine Modulation/Demodulation einbezieht, darin bestehend, im Fall des Aufbaus einer Rufverbindung zwischen den besagten Geräten im Hinblick auf eine Übertragung von Daten:
- Von einem der besagten Geräte an das andere der besagten Geräte eine erste Nachricht, welche in einem nicht standardmäßigen Spezifitätsfeld erste Daten enthält, die geeignet sind, die Ermittlung eines primären Verschlüsselungsschlüssels zu ermöglichen, zu übertragen (F3), und anschließend
- in jedem Gerät (E1, E2), welches fähig ist, Daten zu verschlüsseln/entschlüsseln, den besagten primären Verschlüsselungsschlüssel in Abhängigkeit von den besagten ersten Daten zu ermitteln,
- von demjenigen Gerät, welches die besagte erste Nachricht empfangen hat, an das Gerät, welches diese erste Nachricht gesendet hat, eine zweite Nachricht, welche zweite Daten enthält, die für dessen Eignung zum Verschlüsseln/Entschlüsseln von Daten repräsentativ sind, zu übertragen (F4), wobei die besagten zweiten Daten anhand des besagten primären Verschlüsselungsschlüssels verschlüsselt wurden,
- anschließend, bei Empfang der besagten zweiten Nachricht, in dem Gerät, welches die erste Nachricht gesendet hat, zu versuchen, die besagten zweiten Daten anhand des besagten primären Verschlüsselungsschlüssels zu entschlüsseln, um zu ermitteln, ob sie anhand des besagten primären Verschlüsselungsschlüssels verschlüsselt werden sind, und, wenn dies der Fall ist, daraus zu schließen, dass das Gerät, welches die zweite Nachricht gesendet hat, fähig ist, anhand des besagten primären Verschlüsselungsschlüssels eine Verschlüsselung/Entschlüsselung von Daten durchzuführen,
- anschließend, wenn, und nur wenn, die besagten Geräte beide fähig sind, eine Verschlüsselung/Entschlüsselung von Daten durchzuführen, Verschlüsselungsmittel in dem Gerät, welches Daten zu übertragen hat, zu aktivieren und in dem anderen Gerät, welches diese Daten empfangen soll, Entschlüsselungsmittel zu aktivieren, wobei diese Verschlüsselungsmittel und diese Entschlüsselungsmitel den besagten primären Verschlüsselungsschlüssel verwenden;
**dadurch gekennzeichnet, dass** die besagten ersten Daten für einen sekundären Schlüssel repräsentativ sind,
dass man den besagten primären Verschlüsselungsschlüssel in jedem Gerät (E1, E2), welches fähig ist, Daten zu verschlüsseln/entschlüsseln, in Abhängigkeit von dem besagten sekundären Schlüssel anhand einer in jedem Gerät (E1, E2), welches fähig ist, Daten zu verschlüsseln/entschlüsseln, verfügbaren Berechnungsfunktion ermittelt,
dass die besagten zweiten Daten, die für die Eignung zum Durchführen einer Verschlüsselung/Entschlüsselung von Daten repräsentativ sind, aus einem jedem Gerät (E1, E2), welches fähig ist, Daten zu verschlüsseln/entschlüsseln, bekannten alphanumerischen Wort bestehen.

2. Verfahren nach Anspruch 1, **dadurch gekennzeichnet, dass** die besagten ersten Daten den besagten sekundären Schlüssel bilden.

3. Verfahren nach Anspruch 1, **dadurch gekennzeichnet, dass** man den besagten primären Verschlüsselungsschlüssel während der Dauer der Übertragung der verschlüsselten Daten in identischer Weise und im Wesentlichen zeitgleich in dem besagten anrufenden (E1) und dem besagten angerufenen Gerät (E2) verändert.

4. Verfahren nach Anspruch 1, **dadurch gekennzeichnet, dass**, wenn es sich um Daten vom Typ Faksimile handelt und das anrufende (E1) sowie das angerufene Gerät (E2) über eine Telefaxfunktion vom Typ G3 verfügen, man die besagten ersten Daten in dem besagten angerufenen Gerät (E2) in ein nicht standardmäßiges Spezifitätsfeld vom Typ NSF einer Nachricht, welche DIS-, CSI- und NSF-Felder enthält, einfügt und die besagten zweiten Daten in dem besagten anrufenden Gerät (E1) in eine Nachricht vom Typ TCF oder in ein Feld vom Typ TCS einer anderen Nachricht einfügt.

5. Verfahren nach Anspruch 1, **dadurch gekennzeichnet, dass**, wenn sich um ein anrufendes Gerät (E1) und ein angerufenes Gerät (E2) vom Typ Telefaxgerät vom Typ Super G3 oder G4 und/oder vom Typ Modem mit V8-Standard handelt, man die besagten ersten Daten in dem besagten anrufenden Gerät (E1) in ein nicht standardmäßiges Spezifitätsfeld einer Nachricht vom Typ Call Menu einfügt und die besagten zweiten Daten in dem besagten angerufenen Gerät (E2) in eine Nachricht vom Typ Join Menu oder in ein Feld einer anderen Nachricht einfügt.

6. Datenverschlüsselungs-/Entschlüsselungsvorrichtung (D) für ein erstes Kommunikationsgerät, welches für den Austausch von Daten mit einem zweiten Kommunikationsgerät eines äquivalenten Typs über mindestens ein Kommunikationsnetzwerk (RIP), welches eine Modulation/Demodulation einbezieht, geeignet ist, mit Verarbeitungsmitteln (MT), die dazu ausgelegt sind,
i) bei Aufbau einer Rufverbindung zwischen dem ersten Gerät und dem zweiten Gerät im Hinblick auf eine Übertragung von Daten zwischen den beiden Geräten eine für das besagte zweite Gerät bestimmte erste Nachricht (F3) zu erzeugen, welche in einem nicht standardmäßigen Spezifitätsfeld erste Daten enthält, die dazu geeignet sind, diesen primären Verschlüsselungsschlüssel in Abhängigkeit von den besagten ersten Daten zu ermitteln, und anschließend
ii) bei Empfang einer zweiten Nachricht (F5), welche zweite Daten enthält, die für dessen Eignung zur Verschlüsselung von zu übertragenden Daten repräsentativ sind, von dem besagten zweiten Gerät, gefolgt von dem Empfang von verschlüsselten Daten, Entschlüsselungsmittel (MED) zu aktivieren, um die besagten empfangenen verschlüsselten Daten anhand des besagten primären Verschlüsselungsschlüssels zu entschlüsseln, und Verschlüsselungsmittel (MED) zu aktivieren, um die an das besagte zweite Gerät zu übertragenden Daten anhand des besagten primären Verschlüsselungsschlüssels zu verschlüsseln;
**dadurch gekennzeichnet, dass** die besagten Verarbeitungsmittel (MT) weiterhin dazu ausgelegt sind,
erste Daten, die für einen sekundären Schlüssel repräsentativ sind, zu empfangen,
den besagten primären Verschlüsselungsschlüssel gemäß des besagten sekundären Schlüssels anhand einer in dem ersten Gerät verfügbaren Berechnungsfunktion zu ermitteln;
und zweite Daten, die aus einem diesem ersten Gerät bekannten alphanumerischen Wort bestehen, zu empfangen.

7. Vorrichtung nach Anspruch 6, **dadurch gekennzeichnet, dass** die besagten ersten Daten den besagten sekundären Schlüssel bilden.

8. Vorrichtung nach Anspruch 6, **dadurch gekennzeichnet, dass** die besagten Verarbeitungsmittel (MT) dazu ausgelegt sind, zweite Nachrichten, welche anhand des besagten primären Verschlüsselungsschlüssels verschlüsselte zweite Daten enthalten, zu erzeugen.

9. Vorrichtung nach Anspruch 6, **dadurch gekennzeichnet, dass** die besagten Verarbeitungsmittel (MT) Analysemittel (MA) umfassen, welche dazu ausgelegt sind, bei Empfang einer zweiten Nachricht die darin enthaltenden zweiten Eignungsdaten zu analysieren, um zu ermitteln, ob sie anhand des besagten primären Verschlüsselungsschlüssels verschlüsselt worden sind.

10. Vorrichtung nach Anspruch 9, **dadurch gekennzeichnet, dass** die besagten Verarbeitungsmittel (MT) dazu ausgelegt sind, bei Empfang einer zweiten Nachricht die besagten zweiten Daten anhand des besagten primären Verschlüsselungsschlüssels zu entschlüsseln, und dass die besagten Analysemittel (MA) dazu ausgelegt sind, zur ermitteln, ob das Entschlüsselungsergebnis einer anhand des besagten primären Verschlüsselungsschlüssels durchgeführten Verschlüsselung entspricht, um die besagten Verarbeitungsmittel (MT) zu befähigen, im Fall einer Übereinstimmung die Verschlüsselung der zu übertragenden Daten oder die Entschlüsselung der empfangenen verschlüsselten Daten durchzuführen.

11. Vorrichtung nach einem der Ansprüche 9 oder 10, **dadurch gekennzeichnet, dass** die besagten Verarbeitungsmittel (MT) dazu ausgelegt sind, zweite Daten, welche eine ausgewählte Folge von anhand des besagten primären Verschlüsselungsschlüssels verschlüsselten Symbolen in die besagte zweite Nachricht einzufügen.

12. Vorrichtung nach Anspruch 6, **dadurch gekennzeichnet, dass** die besagten Verarbeitungsmittel (MT) dazu ausgelegt sind, zu verursachen, dass der besagte primäre Verschlüsselungsschlüssel während der Dauer der Übertragung der verschlüsselten Daten verändert wird.

13. Vorrichtung nach Anspruch 6, **dadurch gekennzeichnet, dass**, wenn es sich um Daten vom Typ Faksimile handelt, die besagten Verarbeitungsmittel (MT) dazu ausgelegt sind, die besagten ersten Daten in ein nicht standardmäßiges Spezifitätsfeld vom Typ NSF einer Nachricht, welche DIS-, CSI- und NSF-Felder enthält, einzufügen, und die besagten zweiten Daten in eine Nachricht vom Typ TCF oder in ein Feld vom Typ TCS einer anderen Nachricht einzufügen.

14. Vorrichtung nach Anspruch 6, **dadurch gekennzeichnet, dass**, wenn es sich um Daten vom Typ Faksimile handelt, die besagten Verarbeitungsmittel (MT) dazu ausgelegt sind, die besagten ersten Daten in ein nicht standardmäßiges Spezifitätsfeld einer Nachricht vom Typ Call Menu einzufügen, und die besagten zweiten Daten in ein nicht standardmäßiges Spezifitätsfeld einer Nachricht vom Typ Join Menu oder in ein Feld einer anderen Nachricht einzufügen.

15. Kommunikationsgerät (E1, E2) für ein Kommunikationsnetzwerk mit Internet-Protokoll (RIP), **dadurch gekennzeichnet, dass** es eine Verschlüsselungs- /Entschlüsselungsvorrichtung (D) gemäß einem der Ansprüche 6 bis 14 umfasst.
